# EUROPEAN PATENT SPECIFICATION

(11) **EP 4 430 692 B1**
(45) Date of publication and mention of the grant of the patent: **08.10.2025**
(21) Application number: 22814350.9
(22) Date of filing: 08.11.2022
(51) Int. Cl.: H01M 10/0565

(54) **THERMOPLASTIC VULCANIZATE COMPOSITIONS AS SOLID POLYMER ELECTROLYTES**
THERMOPLASTISCHE VULKANISATZUSAMMENSETZUNGEN ALS FESTE POLYMERELEKTROLYTE
COMPOSITIONS DE VULCANISAT THERMOPLASTIQUE EN TANT QU'ÉLECTROLYSES POLYMÈRES SOLIDES

(30) Priority: 10.11.2021 EP 21306574
(43) Date of publication of application: 18.09.2024
(73) Proprietor: UNIVERSITE DE MONTREAL, Montréal, Québec H3T 1J4 (CA); TotalEnergies OneTech, 92400 Courbevoie (FR); SAFT, 92300 Levallois-Perret (FR)
(72) Inventor: PRÉBÉ, Arnaud, Terrebonne, Québec J6V1K7 (CA); CARADANT, Léa, Montréal, Québec H3T1M2 (CA); LEPAGE, David, Montréal, Québec H4G 1T2 (CA); NICOLLE, Paul, Montréal, Québec H4N0B3 (CA); AYME-PERROT, David, 60190 Arsy (FR); DOLLÉ, Mickaël, Montréal, Québec H2V 2V5 (CA)
(74) Representative: Lavoix
(86) International application number: PCT/EP2022/081114
(87) International publication number: WO 2023/083801

(56) References cited:
- EP-A1- 3 767 728
- US-A1- 2007 021 564
- CARADANT LÉA ET AL: "Effect of Li + Affinity on Ionic Conductivities in Melt-Blended Nitrile Rubber/Polyether", vol. 2, no. 11, 13 November 2020 (2020-11-13), pages 4943 - 4951, XP055916616, ISSN: 2637-6105, Retrieved from the Internet <URL:http://dx.doi.org/10.1021/acsapm.0c00827> DOI: 10.1021/acsapm.0c00827

## Description

The present invention concerns the field of energy storage, and particularly solid-state batteries.

Lithium ion (Li-ion) batteries offer outstanding energy density and are widely used for portable devices and electric and hybrid vehicles for example.

They are based on the reversible exchange of the lithium ion between the positive and negative electrodes, separated by an ionic conductive liquid electrolyte. Such liquid electrolytes are key to allow a good mobility of Li+ cations in the battery cell. Nevertheless, they are based upon organic solvents that are flammable, which can give rise to potential thermal runaways in case of incident. In this context, polymer electrolytes have been developed as ionic conductive solid electrolytes for solid state batteries notably to promote the safety of the systems and to potentially increase the stored energy. Nevertheless, most of these batteries suffer from lithium dendrites growth over charge/discharge cycles which may affect their morphological integrity potentially leading to internal short circuits. In other words, such batteries still have a limited lifetime, and are not as safe as they should be.

In the view of optimizing the solid-state batteries, ionic conductive solid electrolytes must therefore provide excellent ionic conductivity (to be able to work in a power range comparable with Li-ion) together with high mechanical properties (to promote the integrity of battery cells).

Various polymer electrolytes for Li-ion batteries have been explored.

EP3761398 teaches solid polymer electrolytes based on solvents, (co)polymers and crosslinking agents. However, the system proposed ends up with a complete crosslinked system that cannot be reprocessed once obtained. In addition, the system needs to be shaped in its application before crosslinking.

US 2019/0319303 discloses solid electrolyte composition containing an inorganic solid electrolyte and a polymeric binder, such as HNBR**.**

US 2009/0162754 discloses a solid polymer electrolyte for lithium batteries comprising a first polymer, a lithium salt and a second polymer, partially miscible in the first polymer and partially crystalline or vitreous acting as a mechanical reinforcement. However, first these polymers need to be crystalline or vitreous at the operating temperature to be effective as mechanical strengthener, second no elastic properties are brought to the system. Moreover, such polymers have generally very low ionic conductivity when in the vitreous state or when crystalline, preventing this phase from possible impact on the ionic conductivity.

Caradant et al., ACS Appl. Polym. Mater. 2020, 2, 11, 4943-4951 report a blend of poly(ethylene oxide) and hydrogenated nitrile butadiene rubber as a solid polymer electrolyte in lithium-ion batteries. However, in this publication uncrosslinked HNBR is used and no dopant molecules are involved.

The invention has for objective to solve the technical problem linked to supplying an ionic conductive electrolyte securing the battery storage.

The invention in particular aims at supplying an ionic conductive solid electrolyte for solid state batteries. The invention notably aims at supplying an Li⁺ ionic conductive solid electrolyte with high mechanical properties.

The invention also has for objective to provide an industrial preparation method of an ionic conductive electrolyte, in particular an easy and secure industrialized process and simple to set up. Particularly, the invention aims at solving the above technical problems with cost effective and time efficient solutions.

The present invention thus provides for the first time thermoplastic vulcanizates (TPV) based solid polymer electrolytes hereafter called TPV SPEs.

According to a first object, the present invention thus concerns a solid polymer electrolyte (SPE) comprising an alkali metal salt and a thermoplastic vulcanizate (TPV) matrix, wherein said TPV comprises a mixture of at least one crosslinked elastomer phase and at least one thermoplastic polymer phase.

The TPV matrix is thus based on a blend of at least two polymeric phases, preferably two polymeric phases: the crosslinked elastomer phase and the thermoplastic polymer phase.

TPV SPEs exhibit improved properties over usual polymer electrolytes, including better electrochemical stability than polyethylene oxide (demonstrated below with high potential electrodes, e.g. NMC 111), high mechanical properties, and a high strength under pressure (including at room temperature and at elevated temperature) making them particularly adequate for doped/gelified system.

They may also involve a large frame of advantages such as:
- good resistance to the alkali metal dendritic growth, such as lithium dendritic growth;
- stability with high potential electrodes (e.g. LMFP);
- poor flammability, as a nonflammable solvent TEP may be used;
- good cyclability at high temperature; and
- good cyclability at high cycling rates

As used herein, an « alkali metal » is an element such as lithium (Li), sodium (Na), potassium (K). Particularly, the alkali metal is lithium.

The salt of the alkali salt is typically the cation salt thereof, such as Li⁺.

"Elastomer phase" refers to a homogenous polymeric phase in terms of chemical composition and/or texture, constituted by a polymer that displays rubber-like elasticity as defined by the IUPAC.

Said phase is referred to as "crosslinked" or vulcanizated in that it has been subjected to a crosslinking reaction by the action of one or more crosslinking agents. The elastomer is crosslinked in that it comprises covalent bonds or relatively short sequences of chemical bonds to join two polymer chains together, that have been formed by the crosslinking reaction.

Suitable crosslinking agents generally depend on the elastomer polymer that is considered.

Such agents may be chosen from organic peroxides, including dialkyle peroxydes, such as Luperox^{®} peroxydes such as Luperox^{®} DI marketed by Arkema.

According to an embodiment, the elastomer is a thermosetting polymer, typically chosen from cis-1,4-polyisoprene (NR) and trans-1,4-polyisoprene, Synthetic polyisoprene, Polybutadiene, Chloroprene rubber (CR), polychloroprene, Neoprene, Baypren, Butyl rubber, halogenated butyl rubbers such as chloro butyl rubber: CIIR and bromo butyl rubber: BIIR, Styrene-butadiene rubber (SBR), Nitrile rubber (NBR), Hydrogenated nitrile rubbers (HNBR), EPM (ethylene propylene rubber), EPDM rubber (ethylene propylene diene rubber), Epichlorohydrin rubber (ECO), Polyacrylic rubber (ACM, ABR), Silicone rubber (SI, Q, VMQ), Fluorosilicone rubber (FVMQ), Fluoroelastomers (FKM for fluorocarbon-based fluoroelastomer materials defined by the ASTM International standard D1418, and FEPM), Perfluoroelastomers (FFKM), Polyether block amides (PEBA), Chlorosulfonated polyethylene (CSM), Ethylene-vinyl acetate (EVA).

More particularly, the elastomer is chosen from unsaturated or saturated rubber, more particularly, the elastomer is hydrogenated nitrile butadiene rubber (HNBR).

As used herein, "the thermoplastic polymer phase" refers to a polymeric phase constituted by a plastic polymer that becomes pliable or moldable at a certain elevated temperature and solidifies upon cooling.

According to an embodiment, the thermoplastic polymer is chosen from Acrylic, ABS, Nylon, PLA, Polybenzimidazole, Polycarbonate, Polyether sulfone, Polyoxymethylene, Polyether ether ketone, Polyetherimide, Polyethylene, Polyphenylene oxide, Polyphenylene sulfide, Polypropylene, Polystyrene, Polyvinyl chloride, Polyvinylidene fluoride, Polytetrafluoroethylene (Teflon), Poly(ethylene oxide) (PEO), Polycaprolactone (PCL).

According to an embodiment, the thermoplastic polymer is Poly(ethylene oxide) (PEO) or Polycaprolactone (PCL), typically Polycaprolactone (PCL).

The electrolyte salt may be chosen from a variety of lithium-ion conducting electrolyte salts typically used for lithium batteries.

Various types of lithium salts used to conduct Li+ ions in electrolyte solutions for lithium rechargeable batteries are disclosed in particular Xu et al. Formulation of Blended-Lithium-Salt Electrolytes for Lithium Batteries Angew. Chem. Int. Ed. 2020, 59, 3400, and Auger et al. Materials Science and Engineering: R: Reports 2018, 134, 1-21.

Lithium hexafluorophosphate (LiPF₆) which is the dominant Li-salt used in commercial rechargeable lithium-ion batteries. Further illustrative Li-salts include Lithium-bis(trifluoromethanesulfonyl)imide (TFSI), -bis(fluorosulfonyl)imide (FSI), - hexafluoroarsenate (AsF₆⁻), -perchlorate (ClO₄⁻), -hexafluorophosphate (PF₆⁻), - tetrafluoroborate (BF₄⁻), -trifluoromethanesulfonate, -triflate (Tf) (CF₃SO₃⁻), - bis(oxalato)borate (BOB) and -difluoro(oxalato)borate (BODFB).

The electrolyte salt may generally be present in a dissolved form, either in one or more of the polymeric phases, or into one or more of the optional additives that may be present.

The SPE according to the invention may further comprise one or more additional ingredients such as dopants and/or additives such as those usually used in solid polymer electrolytes, including dopants and/or additives.

According to an embodiment, the TPV may further comprise one or more dopant, typically to improve the ionic conductivity. Such dopant may be organic molecules chosen from trimethylphosphate (TMP), triethylphosphate (TEP), fluoroethylene carbonate (FEC), vinylene carbonate (VC).

According to an embodiment, the TPV may further comprise one or more additives, such as solvents, plasticizers, lithium ceramic, inorganic fillers and radical trappers.

Solvents may be chosen from organic liquid, water, ionic liquids, Illustrative solvents include trimethylphosphate (TMP), triethylphosphate (TEP), fluoroethylene carbonate (FEC), vinylene carbonate (VC).

The solvents may be chosen from a variety of lithium-ion conducting liquids typically used for lithium batteries. Various types of solvents used for lithium rechargeable batteries are disclosed in Chem. Rev. 2004, 104, 4303-4417 and Chem. Rev. 2014, 114, 11503-1161.

Plasticizers can be chosen from the variety of known plasticizers from the polymer melt processing industry but can also be any oligomer allowing a reduction in viscosity of the overall formulation. Plasticizers can be compounds such as synthetic or natural oils or polymer oligomers such as glyme molecules for example.

Lithium ceramic may be in the form of lithium aluminum titanium phosphate (*LATP,* Li_{1.3}Al_{0.3}Ti_{1.7}(PO₄)₃), lithium lanthanum zirconium oxide (LLZO, Li₇La₃Zr₂O₁₂).

Radical trappers may be used to extend compounding times by controlling the crosslinking reaction rate. Radical trappers include 2,2,6,6-tetramethylpiperidin-1-yl)oxidanyl (TEMPO), more example is presented by Bertin et al. Kinetic subtleties of nitroxide mediated polymerization. Chemical Society Reviews 2011, 40 (5), 2189-2198.

Inorganic fillers can be used to further reinforce the polymeric phases. They may be added in the elastomeric phase with the crosslinking agents to ensure that these stay in the wanted phase when the crosslinking occurs. Representative inorganic fillers include ceramic fillers such as TiO₂, SiO₂.

According to an embodiment, the SPE composition of the invention comprises a thermoplastic vulcanizate (TPV) matrix, wherein:
- The ratio of the crosslinked elastomer phase(s) relative to the TPV matrix is comprised between 40 and 60% (in volume); and
- The ratio of the thermoplastic polymer phase(s) relative to the TPV matrix is comprised between 40 and 60% (in volume).

Typically, the crosslinked elastomer phase(s) and the thermoplastic polymer phase(s) may be present in a 50/50 volume ratio.

Their respective weight content typically depends on their respective density.

According to an embodiment, the SPE according to the invention may comprise:
- 20 to 70% (weight) of said elastomer;
- 10 to 70% (weight) of said thermoplastic polymer;
- 15 to 45% (weight) of said electrolyte salt;
- 0 to 70% (weight) of dopant; and
- 0 to 20% additives.

The invention has for further objective to supply a solid-state battery that may be easily produced on the industrial scale.

According to a further object, the present invention also concerns a process for preparing the TPVs SPE of the invention comprising the steps of:
a) Mixing the elastomer polymer with a crosslinking agent at a temperature T1 where T1 is comprised between the melting temperature of the elastomer polymer and the activation temperature of the crosslinking agent;
b) Adding the electrolyte salt and the thermoplastic polymer to the mixture obtained in step a);
c) Mixing the resulting mixture of step b) at a temperature T2 where T2 is higher than the activation temperature of the crosslinking agent.

The melting temperature of the elastomer polymer is defined as the temperature for its melting point where the polymer transitions from the solid to the molten form.

The crosslinking agent is defined as above. Its activation temperature is defined as the temperature triggering the crosslinking reaction.

T1 and T2 depend on the nature of the elastomer polymer and the crosslinking agent.

Optional additional ingredients as defined above may be added during step a) and/or step b), as appropriate.
Typically, dopants may be added in step a) or b).
Typically, additives may be added in step a) or b).

According to an embodiment, the process of the invention may be carried out by extrusion.

Typically, the mixing steps a) and b) may be carried out in one or more heated extruder(s) or internal mixer(s).

Suitable extruders may be of the twin screws type.

Following step c), the resulting composition may be further processed to shape it in the desired form.

The final product is not limited in its form. It can be in the form of granules (e.g. at the exit of the extruder) or shaped in the form of a film.

According to a further object, the present invention also concerns an electrochemical all-solid-state cell comprising a solid polymer electrolyte according to the invention.

As used herein, an electrochemical cell, an elementary cell including a positive electrode/electrolyte/negative electrode assembly configured to store the electrical energy that is produced by a chemical reaction and to release it as an electric current.

Typically, the cell of the invention is a Li-ion cell.

According to a further object, the present invention also concerns an electrochemical module comprising the stack of at least two cells according to the invention, each cell being electrically connected with one or more other cell(s).

The term "module" therefore designates the assembly of several electrochemical cells, said assembly being able to be in series and / or parallel.

According to another object, the invention also relates to a battery or "accumulator" comprising one or more modules according to the invention. The term "battery" thus means the assembly of one or more modules according to the invention.

### Figures

Figures 1 and 2 compare the surface expansion of TPV SPEs of the invention and prior art compositions (non-crosslinked elastomer) after compression.
Figures 3 and 4 compare the loss of thickness of TPV SPEs of the invention and prior art compositions (non-crosslinked elastomer) after compression.
Figures 5 and 6 represent the variation of conductivity depending on the temperature, for various TPV SPEs of the invention.
Figures 7 and 9 illustrate the cycling behavior of NMC 111 half-cells incorporating the TPV SPEs of the invention.
Figures 8 and 10 represent the cycling behavior of NMC 111 half-cells incorporating a comparative electrolyte including a non-crosslinked elastomer.
Figure 11 compares the coulombic efficiency and discharge capacity for a TPV SPEs of the invention and a comparative electrolyte including a non-crosslinked elastomer.
Figure 12 compares the coulombic efficiency and discharge capacity for a HNBR-PEO TPV SPEs of the invention and a comparative electrolyte including a non-crosslinked elastomer.

### Examples

### List of acronyms:

SPEs: Solid Polymer Electrolytes
TMP: Trimethyl phosphate
LiTFSI: Lithium bis(trifluoromethanesulfonyl)imide
PCL: Polycaprolactone
PEO: Polyethylene oxide
HNBR: Hydrogenated acrylonitrile butadiene rubber
NMC 111: Lithium-Nickel-Manganese-Cobalt-Oxide (LiNi_{0.33}Mn_{0.33}Co_{0.33}O₂)

### Example 1 (E1): Solid polymer electrolyte (SPE) based on a HNBR-PCL TPV

The HNBR-PCL thermoplastic vulcanizate (TPV) was made with an extruder (15 mL volume Xplore^{®}) using the following protocol:
1. First the elastomer, here the HNBR was introduced in the Xplore at T=115°C during 3 min (rotation speed of 80 rpm). Then, 3 phr of Luperox DI was added and mixed for 5 min with a rotation speed of 80/120 rpm in order to obtain the elastomeric phase containing the active peroxide.
2. The mixture HNBR+DI was removed from the Xplore.
3. 4.64 g of the HNBR+DI mixture was introduced in the Xplore at 115°C.
4. As the temperature is increased to 170°C, 4.95 g of PCL and 3.10 g of LiTFSI are rapidly added around 140°C.
5. The mixture is left in the Xplore during 10 min at 170°C in order to completely activate the peroxide crosslinking agent with a rotation speed of 140 rpm in order to obtain the TPV SPE with the following composition:

| | |
|---|---|
| • HNBR = 35.6 %wt | (Zetpol ^{®} *0020*) |
| • PCL = 39.1 %wt | |
| • LiTFSI = 24.2 %wt | (Shenzhen Capchem Technology) |
| • Luperox DI = 1.1 %wt | (Sigma-Aldrich) |

6. The resulting TPV SPE compound is removed from the Xplore and shaped into a film through compression with a press (pressure of 7 bars at 170°C during 30 s) to obtain a film (thickness of 100 µm).

### Example 2 (E2): TPV based solid polymer electrolyte (SPE) doped with TMP

The TMP doped HNBR-PCL based TPV is obtained using the following protocol:
1. The SPE obtained in example 1 (E1) once transformed into a film is dried and entered in a glove box.
2. TMP is added drop wise on the SPE film in the amount needed to reach 20 %wt of the total SPE.
3. The sample is covered until full penetration of the dopant into the SPE.
4. The final composition of the doped SPE is the following:

| | |
|---|---|
| • HNBR = 28.5 %wt | (Zetpol ^{®} *0020*) |
| • PCL = 31,3 %wt | |
| • LiTFSI = 19.3 %wt | (Shenzhen Capchem Technology) |
| • Luperox DI = 0.9%wt | (Sigma-Aldrich) |
| • TMP = 20%wt | (Sigma-Aldrich) |

### Counter example 1 (CE1): SPE based on a HNBR-PCL blend (without crosslinking)

The same procedure and amounts as for example 1 were used except no crosslinking agents were added to the HNBR elastomeric phase. The composition obtained is as follows:

| | |
|---|---|
| • HNBR = 36 %wt | (Zetpol ^{®} *0020*) |
| • PCL = 39.5 %wt | |
| • LiTFSI = 24.5 %wt | (Shenzhen Capchem Technology) |

### Counter example 2 (CE2): SPE based on a HNBR-PCL blend (without crosslinking) doped with TMP

The TMP doped HNBR-PCL blend is obtained using the following protocol:
1. The SPE blend obtained in counter example 1 (CE1) once transformed into a film is dried and entered in a glove box.
2. TMP is added drop wise on the SPE film in the amount needed to reach 20 %wt of the total SPE.
3. The sample is covered until full penetration of the dopant into the SPE.
4. The final composition of the doped SPE is the following:

| | |
|---|---|
| • HNBR = 28.8 %wt | (Zetpol ^{®} *0020*) |
| • PCL = 31.6 %wt | (Sigma-Aldrich) |
| • LiTFSI = 19.6 %wt | (Shenzhen Capchem Technology) |
| • TMP = 20% | (Sigma-Aldrich) |

### Example 3 (E3): Solid polymer electrolyte (SPE) based on a HNBR-PEO TPV

The HNBR-PEO thermoplastic vulcanizate (TPV) was made with an extruder (15 mL volume Xplore^{®}) using the following protocol:
1. First the elastomer, here the HNBR was introduced in the Xplore at T=115°C during 3 min (rotation speed of 80 rpm). Then, 2 phr of Luperox DI was added and mixed for 5 min with a rotation speed of 80/120 rpm in order to obtain the elastomeric phase containing the active peroxide.
2. The mixture HNBR+DI was removed from the Xplore.
3. 6,18 g of the HNBR+DI mixture was introduced in the Xplore at 115°C.
4. As the temperature is increased to 170°C, 7 g of PEO and 4,22 g of LiTFSI are rapidly added around 140°C.
5. The mixture is left in the Xplore during 10 min at 170°C in order to completely activate the peroxide crosslinking agent with a rotation speed of 140 rpm in order to obtain the TPV SPE with the following composition:

| | |
|---|---|
| • HNBR = 34,8 %wt | (Zetpol ^{®} *0020*) |
| • PEO = 40,2 %wt | (Sigma-Aldrich) |
| • LiTFSI = 24,3 %wt | (Shenzhen Capchem Technology) |
| • Luperox DI = 0,7 %wt | (Sigma-Aldrich) |

6. The resulting TPV SPE compound is removed from the Xplore and shaped into a film through compression with a press (pressure of 7 bars at 170°C during 30 s) to obtain a film (thickness of 100 µm).

### Example 4 (E4): TPV based solid polymer electrolyte (SPE) doped with TMP

The TMP doped HNBR-PEO based TPV is obtained using the following protocol:
1. The SPE obtained in example 1 (E1) once transformed into a film is dried and entered in a glove box.
2. TMP is added drop wise on the SPE film in the amount needed to reach 20 %wt of the total SPE.
3. The sample is covered until full penetration of the dopant into the SPE.
4. The final composition of the doped SPE is the following:

| | |
|---|---|
| • HNBR = 27.8 %wt | (Zetpol ^{®} *0020*) |
| • PEO = 32.2 %wt | (Sigma-Aldrich) |
| • LiTFSI = 19.4 %wt | (Shenzhen Capchem Technology) |
| • Luperox DI = 0.6%wt | (Sigma-Aldrich) |
| • TMP = 20%wt | (Sigma-Aldrich) |

### Counter example 3 (CE3): SPE based on a HNBR-PEO blend (without crosslinking)

The same procedure and amounts as for example 3 were used except no crosslinking agents were added to the HNBR elastomeric phase. The composition obtained is as follows:

| | |
|---|---|
| • HNBR = 35.5 %wt | (Zetpol ^{®} *0020*) |
| • PEO = 40.2 %wt | (Sigma-Aldrich) |
| • LiTFSI = 24.3 %wt | (Shenzhen Capchem Technology) |

### Counter example 4 (CE4): SPE based on a HNBR-PEO blend (without crosslinking) doped with TMP

The TMP doped HNBR-PEO blend is obtained using the following protocol:
1. The SPE blend obtained in counter example 3 (CE3) once transformed into a film is dried and entered in a glove box.
2. TMP is added drop wise on the SPE film in the amount needed to reach 20 %wt of the total SPE.
3. The sample is covered until full penetration of the dopant into the SPE.
4. The final composition of the doped SPE is the following:

| | |
|---|---|
| • HNBR = 28.4 %wt | (Zetpol ^{®} *0020*) |
| • PCL = 32.2 %wt | (Sigma-Aldrich) |
| • LiTFSI = 19.4 %wt | (Shenzhen Capchem Technology) |
| • TMP = 20% | (Sigma-Aldrich) |

### Characterisation of example and counter example:

### a. Pressure and temperature tests

After complete drying at 60 °C for 12 hours, samples with a thickness of 1000 µm and 16 mm in diameter were placed in an oven at 80°C during 1 hour with a weight of 2,8 kg on it in order to apply near 20 psi of pressure. The thickness and the surface of each sample were measured after the test. For samples containing dopants, they were added after the drying procedure in the glove box.

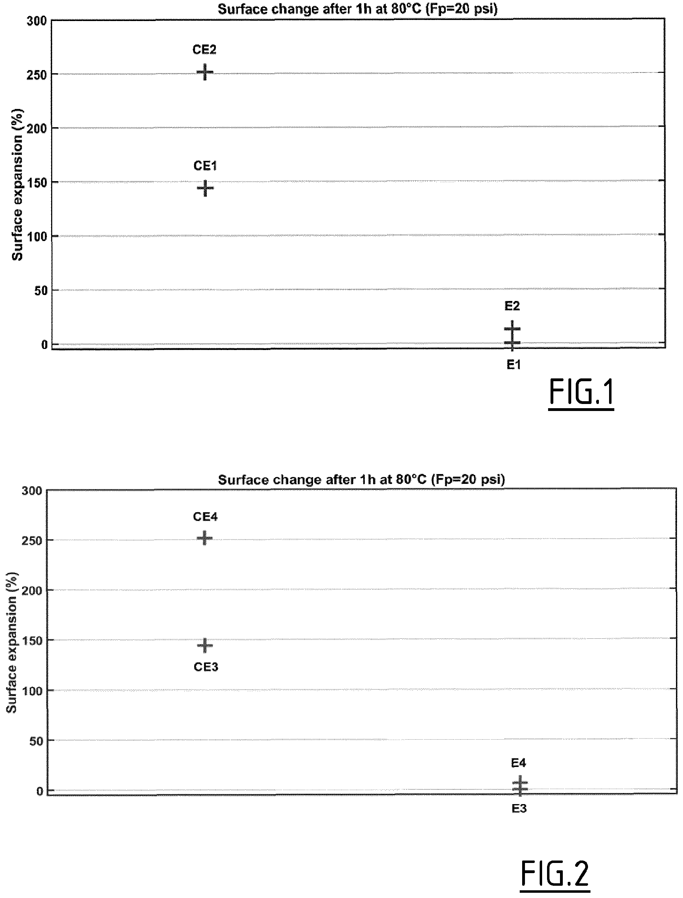

The surface expansions for the compositions of Example 1 and 2 as well as Counter Example 1 and 2 are illustrated in Figure 1. The surface expansions for the compositions of Example 3 and 4 as well as Counter Example 3 and 4 are illustrated in Figure 2.

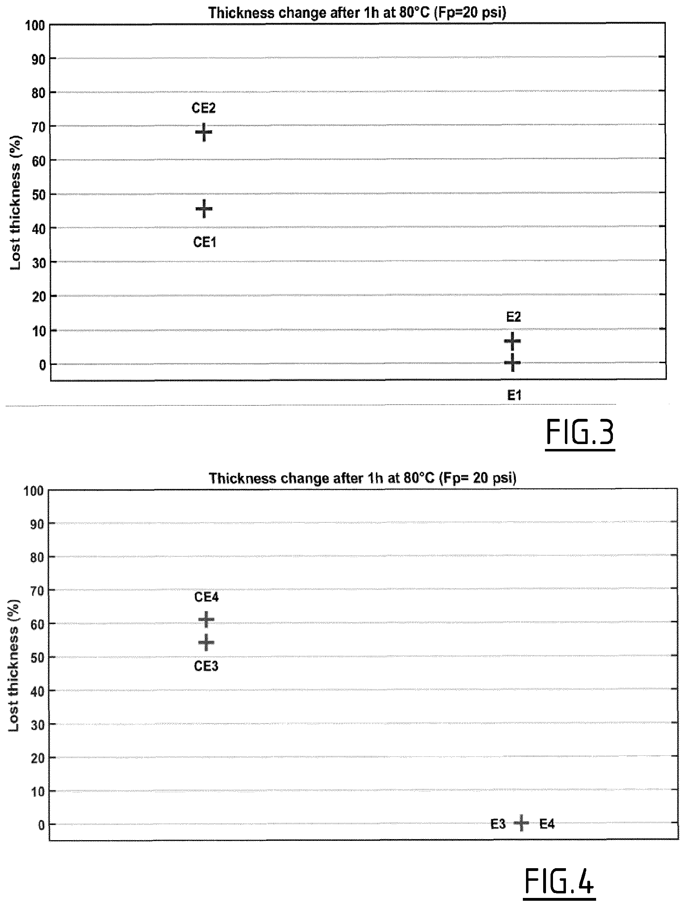

The thickness changes for the compositions of Example 1 and 2 as well as Counter Example 1 and 2 are illustrated in Figure 3. The thickness changes for the compositions of Example 3 and 4 as well as Counter Example 3 and 4 are illustrated in Figure 4.

### b. Ionic conductivity

The conductivity measurements were performed using a MTZ-35 impedance analyzer and ITS (Intermediate Temperature System) between 20°C and 80°C with scanned frequencies between 3.5×10⁷ Hz and 5×10⁻² Hz and a voltage amplitude of 100 mV.

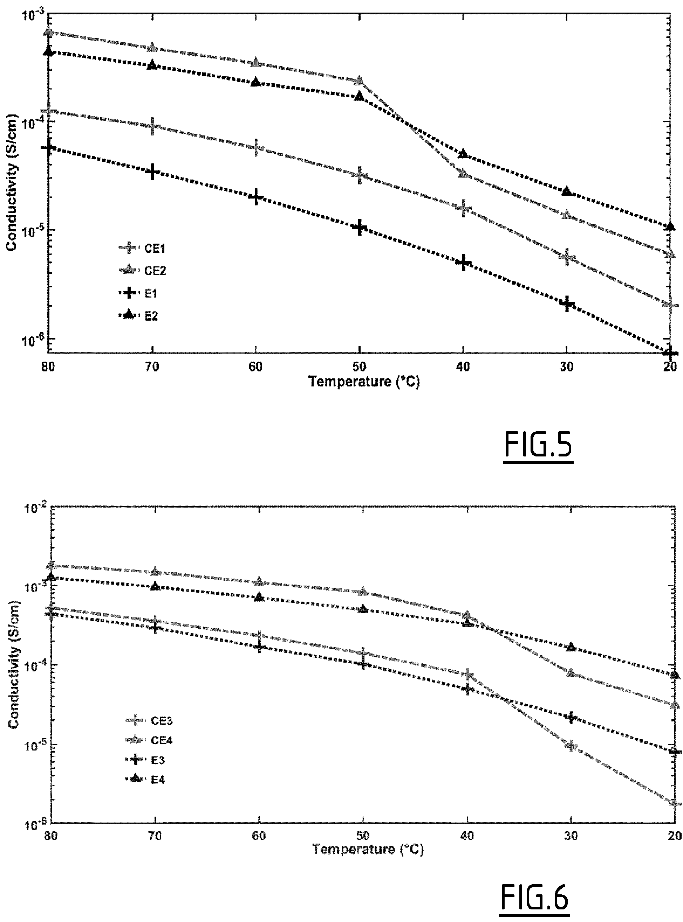

The conductivity for the compositions of Example 1 and 2 as well as Counter Example 1 and 2 are illustrated in Figure 5. The conductivity for the compositions of Example 3 and 4 as well as Counter Example 3 and 4 are illustrated in Figure 6.

### Example 5: NMC cathode using SPE from example 1 (E1)

The NMC electrode was made with an extruder (15 mL volume Xplore^{®}) using the following protocol:
1. First 3.64 g of E1 was introduced in the Xplore at T=170°C during 2 min (rotation speed of 80 rpm).
2. 8.40 g of the NMC 111 active material was introduced in the Xplore at 170°C with a rotation speed of 60 rpm.
3. When all the active material has been introduced, 1.96 g of carbon black are slowly added (rotation speed of 60 rpm).
4. The mixture is left in the Xplore during 4 min at 170°C in order to completely homogenize the mixture.
5. Electrodes of NMC 111 were laminated on a carbon coated aluminum current collector with a calendar at 120°C.
6. The electrode was then entered in a glove box.
7. TMP is added drop wise on the electrode film in the amount needed to reach 20 %wt of the SPE weight (without taking into account NMC or carbon black).
8. The sample is covered until full penetration of the dopant into the cathode.
9. The NMC cathode had the following composition:
   - NMC (111) = 56.3 %wt
   - Carbon black (C65) = 13,2 %wt
   - HNBR = 8.6 %wt
   - PCL = 9.6 %wt
   - LiTFSI = 5.9 %wt
   - Luperox DI = 0.3 %wt
   - TMP = 6.1 %wt

### Counter example 5: NMC cathode using SPE from counter example 1 (CE1)

The same procedure and amounts as for example 3 were used except the SPE used was the one from counter example 1. The same amount of TMP is added in the glove box on the electrode (20 %wt versus SPE content). The composition obtained is as follows:
- NMC (111) = 56.3 %wt
- Carbon black (C65) = 13.2 %wt
- HNBR = 8.7 %wt
- PCL = 9.7 %wt
- LiTFSI = 6.0 %wt
- TMP = 6.1 %wt

### Example 6: NMC cathode using SPE from example 3 (E3)

The NMC electrode was made with an extruder (15 mL volume Xplore^{®}) using the following protocol:
1. First 3.64 g of E3 was introduced in the Xplore at T=170°C during 2 min (rotation speed of 80 rpm).
2. 8.40 g of the NMC 111 active material was introduced in the Xplore at 170°C with a rotation speed of 60 rpm.
3. When all the active material has been introduced, 1.96 g of carbon black are slowly added (rotation speed of 60 rpm).
4. The mixture is left in the Xplore during 4 min at 170°C in order to completely homogenize the mixture.
5. Electrodes of NMC 111 were laminated on a carbon coated aluminum current collector with a calendar at 120°C.
6. The electrode was then entered in a glove box.
7. TMP is added drop wise on the electrode film in the amount needed to reach 20 %wt of the SPE weight (without taking into account NMC or carbon black).
8. The sample is covered until full penetration of the dopant into the cathode.
9. The NMC cathode had the following composition:
   - NMC (111) = 56.3 %wt
   - Carbon black (C65) = 13,2 %wt
   - HNBR = 8.4 %wt
   - PEO = 9.9 %wt
   - LiTFSI = 5.9 %wt
   - Luperox DI = 0.2 %wt
   - TMP = 6.1 %wt

### Counter example 6: NMC cathode using SPE from counter example 3 (CE3)

The same procedure and amounts as for example 3 were used except the SPE used was the one from counter example 1. The same amount of TMP is added in the glove box on the electrode (20 %wt versus SPE content). The composition obtained is as follows:
- NMC (111) = 56.3 %wt
- Carbon black (C65) = 13.2 %wt
- HNBR = 8.6 %wt
- PEO = 9.9 %wt
- LiTFSI = 5.9 %wt
- TMP = 6.1 %wt

### Cycling test: NMC vs Li

Cycling tests were performed in coin cell at 60°C with a cycling rate of C/20 (half charge-discharge cycle in 20 hours).
- NMC 111 half-cell

### Assembly 1 (A1): made with example following the invention

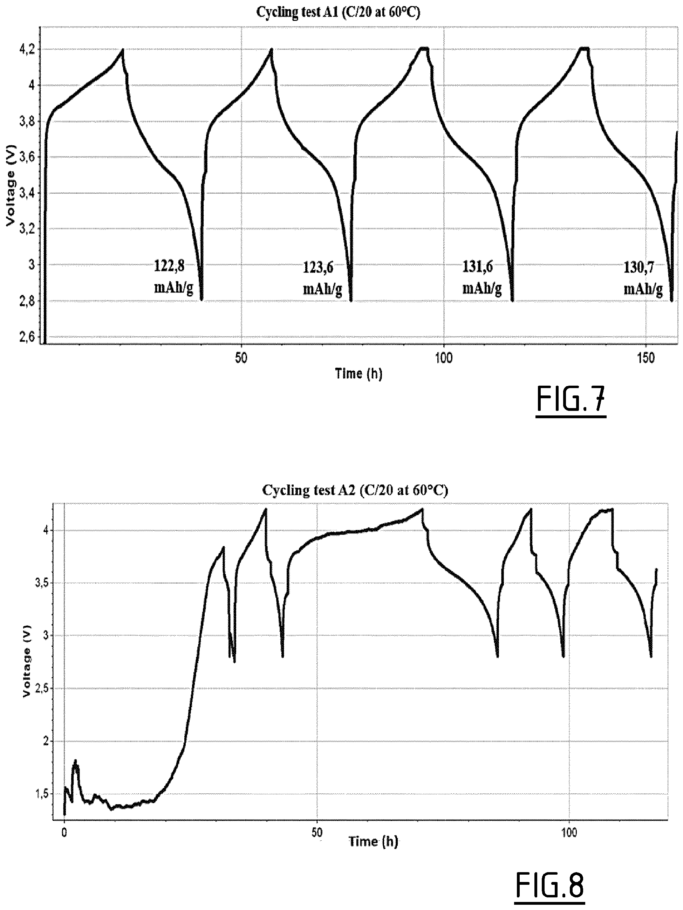

Coin cell Li | E2 SPE | E3 NMC.
E2 SPE was laminated on the E3 NMC electrode (140°C in a dry atmosphere Ar-filled glovebox) and then, the stack Li | E2 SPE | E3 NMC was laminated at 140°C.
E3 Electrode loading: 4.3 mg/cm².
Theoretical capacity: 145 mAh/g.
E2 SPE thickness: 125±25 µm.
Voltage limits: 2.8 V in discharge and 4.2 V in charge with a voltage stabilization at 4.2 V during 2 hours after each charge.
The cycling test for Assembly 1 (A1) is represented in Figure 7.

- NMC 111 half-cell

### Assembly 2 (A2): made with counter example not following the invention

Coin cell Li | CE2 SPE | CE3 NMC.
CE2 SPE was laminated on the CE3 NMC electrode (120°C in a dry atmosphere Ar-filled glovebox) and then, the stack Li | CE2 SPE | CE3 NMC was laminated at 120°C.
CE3 Electrode loading: 4.8 mg/cm².
Theoretical capacity: 145 mAh/g.
CE2 SPE thickness: 125±25 µm.
Voltage limits: 2.8 V in discharge and 4.2 V in charge.
The cycling test for Assembly 2 (A2) is represented in Figure 8.

### Assembly 3 (A3): made with example following the invention

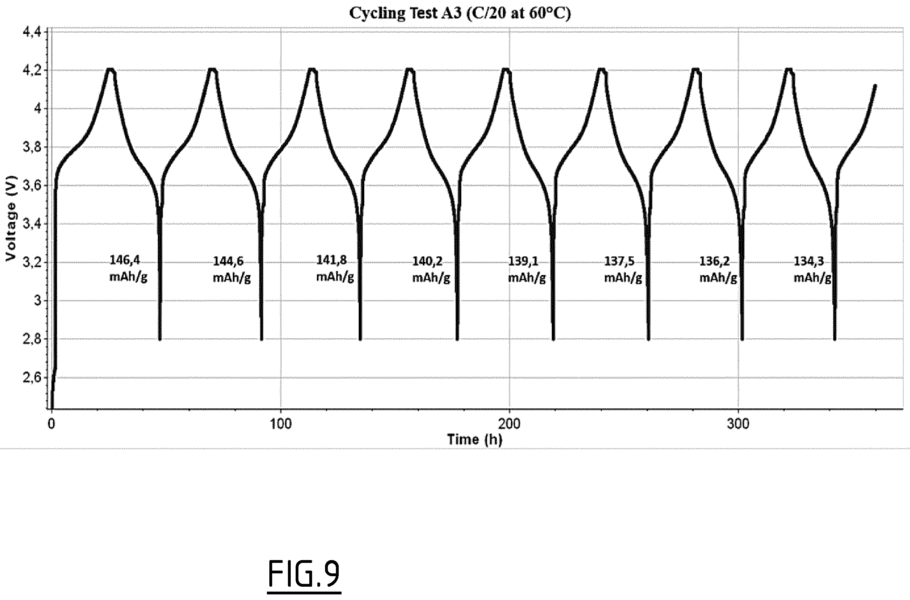

Coin cell Li| E4 SPE | E6 NMC.
E4 SPE was laminated on the E6 NMC electrode (140°C in a dry atmosphere Ar-filled glovebox) and then, the stack Li | E4 SPE | E6 NMC was laminated at 140°C.
E6 Electrode loading: 4.8 mg/cm².
Theoretical capacity: 145 mAh/g.
E4 SPE thickness: 125±25 µm.
Voltage limits: 2.8 V in discharge and 4.2 V in charge with a voltage stabilization at 4.2 V during 2 hours after each charge.
The cycling test for Assembly 3 (A3) is represented in Figure 9.

### Assembly 4 (A4): made with counter example not following the invention

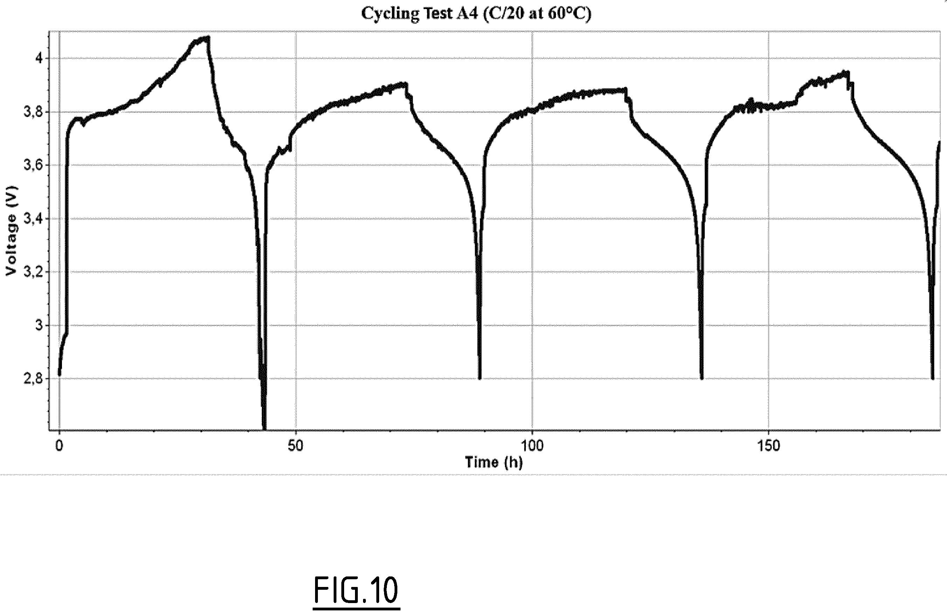

Coin cell Li| CE4 SPE | CE6 NMC.
CE4 SPE was laminated on the CE6 NMC electrode (120°C in a dry atmosphere Ar-filled glovebox) and then, the stack Li | CE2 SPE | CE3 NMC was laminated at 120°C.
CE6 Electrode loading: 4.4 mg/cm².
Theoretical capacity: 145 mAh/g.
CE4 SPE thickness: 125±25 µm.
Voltage limits: 2.8 V in discharge and 4.2 V in charge.
The cycling test for Assembly 4 (A4) is represented in Figure 10.

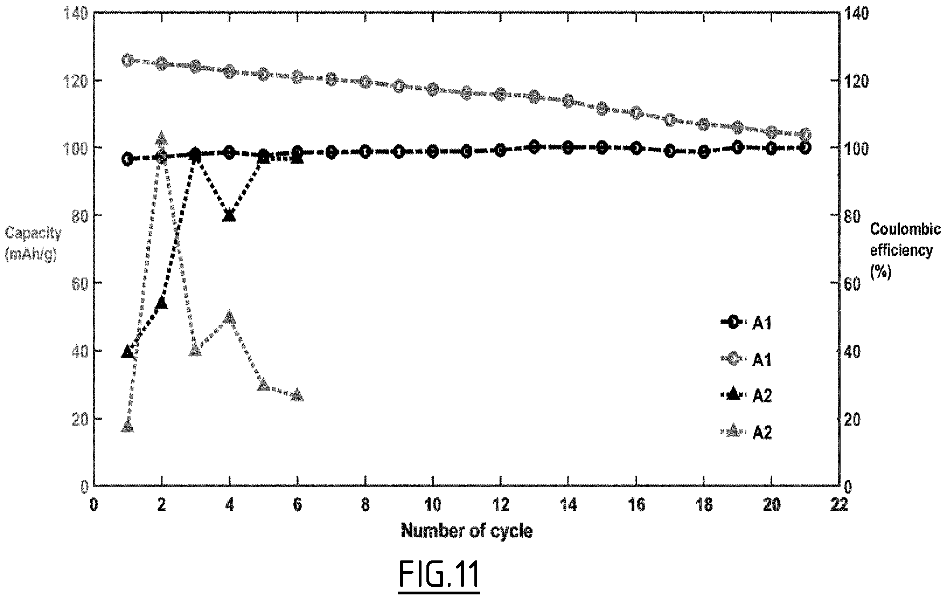

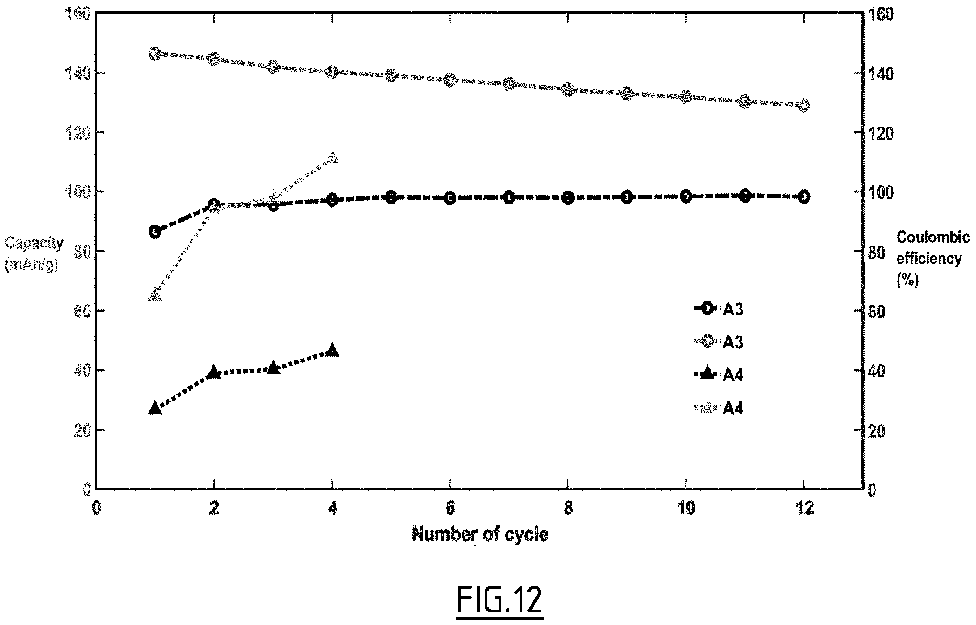

The electrochemical performances of Assembly 1 and 2 are compared in Figure 11 and of Assembly 3 and 4 in figure 12.

Altogether, the results show the improved mechanical resistance (Figures 1 to 4) and the enhanced stability of the compositions of the invention.

## Claims

1. A solid polymer electrolyte (SPE) comprising an alkali metal salt and a thermoplastic vulcanizate (TPV) matrix, wherein said TPV comprises a mixture of at least one crosslinked elastomer phase and at least one thermoplastic polymer phase.

2. The SPE according to claim 1 wherein the alkali metal salt is a lithium salt.

3. The SPE according to claim 1 or 2 wherein the elastomer is chosen from unsaturated or saturated rubber.

4. The SPE according to anyone of the preceding claims wherein the elastomer is hydrogenated nitrile butadiene rubber (HNBR).

5. The SPE according to anyone of the preceding claims wherein the thermoplastic polymer is Polycaprolactone (PCL).

6. The SPE according to anyone of the preceding claims wherein the TPV further comprises a dopant.

7. The SPE according to claim 6 wherein the dopant is chosen from trimethylphosphate (TMP), triethylphosphate (TEP), fluoroethylene carbonate (FEC), vinylene carbonate (VC).

8. The SPE according to anyone of the preceding claims comprising:
- 20 to 70% (weight) of said elastomer;
- 10 to 70% (weight) of said thermoplastic polymer;
- 15 to 45% (weight) of said electrolyte salt;
- 0 to 70% (weight) of dopant; and
- 0 to 20% (weight) of additives.

9. A process for preparing the SPE according to anyone of the preceding claims comprising the steps of:
a) Mixing the elastomer polymer with a crosslinking agent at a temperature T1 where T1 is comprised between the melting temperature of the elastomer polymer and the activation temperature of the crosslinking agent;
b) Adding the electrolyte salt and the thermoplastic polymer to the mixture obtained in step a);
c) Mixing the resulting mixture of step b) at a temperature T2 where T2 is higher than the activation temperature of the crosslinking agent.

10. The process according to claim 9 wherein the crosslinking agent is chosen from organic peroxides.

11. The process according to anyone of claims 9 and 10 wherein the mixing steps a) and b) are carried out in one or more heated extruder(s).

12. An electrochemical cell comprising a polymer electrolyte according to anyone of claims 1 to 8.

13. A module comprising the stack of at least two cells according to claim 12, each cell being electrically connected with one or more other cell(s).

14. A battery comprising one or more modules according to claim 13.

## Patentansprüche

1. Fester Polymerelektrolyt (SPE), umfassend ein Alkalimetallsalz und eine Matrix aus thermoplastischem Vulkanisat (TPV), wobei das TPV ein Gemisch aus zumindest einer vernetzten Elastomerphase und zumindest einer thermoplastischen Polymerphase umfasst.

2. SPE nach Anspruch 1, wobei das Alkalimetallsalz ein Lithiumsalz ist.

3. SPE nach Anspruch 1 oder 2, wobei das Elastomer aus ungesättigtem oder gesättigtem Kautschuk ausgewählt ist.

4. SPE nach einem der vorstehenden Ansprüche, wobei das Elastomer hydrierter Nitril-Butadien-Kautschuk (HNBR) ist.

5. SPE nach einem der vorstehenden Ansprüche, wobei das thermoplastische Polymer Polycaprolacton (PCL) ist.

6. SPE nach einem der vorstehenden Ansprüche, wobei das TPV ferner ein Dotiermittel umfasst.

7. SPE nach Anspruch 6, wobei das Dotiermittel aus Trimethylphosphat (TMP), Triethylphosphat (TEP), Fluorethylencarbonat (FEC), Vinylencarbonat (VC) ausgewählt ist.

8. SPE nach einem der vorstehenden Ansprüche, umfassend:
- zu 20 bis 70 Gew.-% das Elastomer;
- zu 10 bis 70 Gew.-% das thermoplastische Polymer;
- zu 15 bis 45 Gew.-% das Elektrolytsalz;
- zu 0 bis 70 Gew.-% Dotierungsmittel; und
- zu 0 bis 20 Gew.-% Zusatzstoffe.

9. Verfahren zum Herstellen des SPE nach einem der vorstehenden Ansprüche, das die Folgende Schritte umfasst:
a) Mischen des Elastomerpolymers mit einem Vernetzungsmittel bei einer Temperatur T1, wobei T1 zwischen der Schmelztemperatur des Elastomerpolymers und der Aktivierungstemperatur des Vernetzungsmittels liegt;
b) Zusetzen des Elektrolytsalzes und des thermoplastischen Polymers zu dem Gemisch, das in Schritt a) erhalten wurde;
c) Mischen des entstehenden Gemischs von Schritt b) bei einer Temperatur T2, wobei T2 höher als die Aktivierungstemperatur des Vernetzungsmittels ist.

10. Verfahren nach Anspruch 9, wobei das Vernetzungsmittel aus organischen Peroxiden ausgewählt ist.

11. Verfahren nach einem der Ansprüche 9 und 10, wobei die Mischschritte a) und b) in einem oder mehreren erhitzten Extrudern durchgeführt werden.

12. Elektrochemische Zelle, die einen Polymerelektrolyt nach einem der Ansprüche 1 bis 8 umfasst.

13. Modul, das den Stapel aus zumindest zwei Zellen nach Anspruch 12 umfasst, wobei jede Zelle elektrisch mit einer oder mehreren anderen Zellen verbunden ist.

14. Batterie, die ein oder mehrere Module nach Anspruch 13 umfasst.

## Revendications

1. Électrolyte polymère solide (SPE) comprenant un sel de métal alcalin et une matrice de vulcanisat thermoplastique (TPV), dans lequel ledit TPV comprend un mélange d'au moins une phase d'élastomère réticulé et d'au moins une phase de polymère thermoplastique.

2. SPE selon la revendication 1 dans lequel le sel de métal alcalin est un sel de lithium.

3. SPE selon la revendication 1 ou 2 dans lequel l'élastomère est choisi parmi un caoutchouc insaturé ou saturé.

4. SPE selon l'une quelconque des revendications précédentes dans lequel l'élastomère est un caoutchouc nitrile-butadiène hydrogéné (HNBR).

5. SPE selon l'une quelconque des revendications précédentes dans lequel le polymère thermoplastique est une polycaprolactone (PCL).

6. SPE selon l'une quelconque des revendications précédentes dans lequel le TPV comprend en outre un dopant.

7. SPE selon la revendication 6 dans lequel le dopant est choisi parmi le triméthylphosphate (TMP), le triéthylphosphate (TEP), le carbonate de fluoroéthylène (FEC), le carbonate de vinylène (VC).

8. SPE selon l'une quelconque des revendications précédentes comprenant :
- de 20 à 70 % (en poids) dudit élastomère ;
- de 10 à 70 % (en poids) dudit polymère thermoplastique ;
- de 15 à 45 % (en poids) dudit sel électrolytique ;
- 0 à 70 % (en poids) de dopant ; et
- de 0 à 20 % (en poids) d'additifs.

9. Procédé de préparation du SPE selon l'une quelconque des revendications précédentes comprenant les étapes consistant à :
a) mélanger le polymère élastomère avec un agent de réticulation à une température T1 où T1 est comprise entre la température de fusion du polymère élastomère et la température d'activation de l'agent de réticulation ;
b) ajouter le sel d'électrolyte et le polymère thermoplastique au mélange obtenu à l'étape a) ;
c) mélanger le mélange résultant de l'étape b) à une température T2 où T2 est supérieure à la température d'activation de l'agent de réticulation.

10. Procédé selon la revendication 9 dans lequel l'agent de réticulation est choisi parmi les peroxydes organiques.

11. Procédé selon l'une quelconque des revendications 9 et 10 dans lequel les étapes de mélange a) et b) sont réalisées dans une ou plusieurs extrudeuses chauffées.

12. Cellule électrochimique comprenant un électrolyte polymère selon l'une quelconque des revendications 1 à 8.

13. Module comprenant l'empilement d'au moins deux cellules selon la revendication 12, chaque cellule étant connectée électriquement à une ou plusieurs autres cellules.

14. Batterie comprenant un ou plusieurs modules selon la revendication 13.
